# EUROPEAN PATENT APPLICATION

(11) **EP 4 621 736 A1**
(43) Date of publication of application: **24.09.2025**
(21) Application number: 25165166.7
(22) Date of filing: 20.03.2025
(51) Int. Cl.: G06V 20/40, G06V 20/52

(54) **METHOD AND SYSTEM FOR QUERYING A VIDEO BY INCORPORATING VIDEO ANALYTICS AND LARGE LANGUAGE MODELS**

(30) Priority: 20.03.2024 US 202463567747 P; 11.04.2024 US 202463632794 P
(71) Applicant: Briefcam Ltd., Modi'in 7177871 (IL)
(72) Inventor: DVIR, Igal, 7177871 c/o BriefCam Ltd. 2 HaMaayan Street, Modiin (IL); PELEG, Shmuel, 7177871 c/o BriefCam Ltd. 2 HaMaayan Street, Modiin (IL); EINSTEIN, Ori, 7177871 c/o BriefCam Ltd. 2 HaMaayan Street, Modiin (IL); ABRAMSON, Haggai, 7177871 c/o BriefCam Ltd. 2 HaMaayan Street, Modiin (IL); ELBOHER, Elhanan Hayim, 7177871 c/o BriefCam Ltd. 2 HaMaayan Street, Modiin (IL); HABER, Shimrit, 7177871 c/o BriefCam Ltd. 2 HaMaayan Street, Modiin (IL); KEREN, Dana, 7177871 c/o BriefCam Ltd. 2 HaMaayan Street, Modiin (IL); ALT, Ofer, 7177871 c/o BriefCam Ltd. 2 HaMaayan Street, Modiin (IL); BUKANET, Matan, 7177871 c/o BriefCam Ltd. 2 HaMaayan Street, Modiin (IL)
(74) Representative: Pearl Cohen Zedek Latzer Baratz UK LLP

(57) **Abstract**

A method and system for querying a video by incorporating video analytics and large language models (LLM). The method may include the following steps: receiving a video stream having a sequence of frames and including one or more objects; applying video analytics algorithms to the video stream, to yield video analytics features indicative of the one or more objects; receiving a user query comprising a verbal or auditory enquiry relating to the one or more objects in the video stream; carrying out a selection of at least one of the one or more objects in the video stream; generating, a prompt which is usable as a query for a large language model (LLM), based on: the user query, the video analytics features, and the selection of the at least one of the one or more objects; and applying, the prompt to the LLM, to yield an LLM response.

## Description

### FIELD OF THE INVENTION

The present invention relates generally to the field of video surveillance, and more particularly, to use of video analytics and large language models in video surveillance systems.

### BACKGROUND OF THE INVENTION

Prior to setting forth the background of this invention, it would be advantageous to provide some definitions set forth below.

The term "closed-circuit television" (CCTV), also known as "video surveillance", as used herein is defined as the use of closed-circuit television cameras to transmit a signal to a specific place on a limited set of monitors. It differs from broadcast television in that the signal is not openly transmitted, though it may employ point-to-point, point-to-multipoint (P2MP), or mesh wired or wireless links. Even though almost all video cameras fit this definition, the term is most often applied to those used for surveillance in areas that require additional security or ongoing monitoring

The term "video content analysis" or "video content analytics" (VCA), also known as "video analysis" or "video analytics" (VA), as used herein is defined as the capability of automatically analyzing video to detect and determine temporal and spatial events. This technical capability is used in a wide range of domains. The algorithms can be implemented as software on general-purpose machines, or as hardware in specialized video processing units. Many different functionalities can be implemented in VCA. Video Motion Detection is one of the simpler forms where motion is detected with regard to a fixed background scene. More advanced functionalities include video tracking and egomotion estimation. Based on the internal representation that VCA generates in the machine, it is possible to build other functionalities, such as video summarization, identification, behavior analysis, or other forms of situation awareness. VCA relies on good input video, so it is often combined with video enhancement technologies such as video denoising, image stabilization, unsharp masking, and super-resolution.

The term "large language model" (LLM) as used herein is defined as a type of machine learning model designed for natural language processing tasks such as language generation. LLMs are language models with many parameters, and are trained with self-supervised learning on a vast amount of text. The largest and most capable LLMs are generative pretrained transformers (GPTs). Modern models can be fine-tuned for specific tasks or guided by prompt engineering.

LLMs may provide information on one or more images given to them. However, because of memory and computer time limitation, LLMs cannot analyze efficiently and quickly video clips. On the other hand, video analytics methods can analyze video quickly and efficiently and extract rich information about the objects in the scene.

### SUMMARY OF THE INVENTION

The present invention, in embodiments thereof, addresses the aforementioned drawbacks of currently available technology. Embodiments of the present invention are aimed at improving significantly the ability of LLMs to handle prompts directed at video streams.

Embodiments of the present invention propose a system to combine the complementary powers of LLMs and video analytic system, allowing to query the content in a video clip using natural language. While LLMs are now limited in their ability to process videos represented as a sequence of video frames, embodiments of the present invention present the video to the LLM in a much more compact form: combining one or more video frames from the video clip, plus meta data generated by video analytics, such as trajectories of one or more objects in the scene.

In accordance with some embodiments of the present invention, a method for querying a video by incorporating video analytics and large language models (LLM) is provided herein. The method may include the following steps: receiving a video stream having a sequence of frames and including one or more objects; applying video analytics algorithms to the video stream, to yield video analytics features indicative of the one or more objects; receiving a user query comprising a verbal or auditory enquiry relating to the one or more objects in the video stream; carrying out a selection of at least one of the one or more objects in the video stream; generating, a prompt which is usable as a query for a large language model (LLM), based on: the user query, the video analytics features, and the selection of the at least one of the one or more objects; and applying, the prompt to the LLM, to yield an LLM response.

Some embodiments of the present invention implement the aforementioned method as part of a video surveillance system.

These and other advantages of the present invention are set forth in detail in the following description.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:
**Figure 1** is a block diagram illustrating an architecture of a system accordance with some embodiments of the present invention;
**Figure 2** is a block diagram illustrating an architecture of another system accordance with some embodiments of the present invention;
**Figure 3** is a high-level flowchart illustrating a method in accordance with some embodiments of the present invention;
**Figure 4** shows a video frame illustrating an aspect in accordance with some embodiments of the present invention;
**Figure 5** shows a video frame illustrating an aspect in accordance with some embodiments of the present invention;
**Figure 6** shows a video frame illustrating an aspect in accordance with some embodiments of the present invention;
**Figure 7** shows a video frame illustrating an aspect in accordance with some embodiments of the present invention; and
**Figure 8** shows a video frame illustrating an aspect in accordance with some embodiments of the present invention.

It will be appreciated that, for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various aspects of the present invention will be described. For purposes of explanation, specific configurations and details are set forth in order to provide a thorough understanding of the present invention. However, it will also be apparent to one skilled in the art that the present invention may be practiced without the specific details presented herein. Furthermore, well-known features may be omitted or simplified in order not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

Further to the definitions set forth above, the following description:
Video Input is any video, recorded or a live stream, possibly accompanied by meta data such as recorded time, location, viewing direction, and other data such as detailed camera parameters.

Video analytics input relates to data generated by a video analytics system analyzing the video input. Such systems can track moving objects within a field of view of a camera, optionally classifying objects into types and collecting additional attributes for each object. An example includes video analytics engine. Specific data generated by a video analytics system can be an image depicting the trajectory of one or more objects given using the coordinates of one of the input frames.

A Large Language Model (LLM) relates to a machine learning model capable of receiving images and textual information for processing.

Textual Inputs relate to the text input can have two parts: (i) Initial assumptions, facts, or raw testimonials; (ii) The desired information requested from the LLM, that requires the analysis by the LLM of the input video as provided by the system, as well as the video analytics data. Such textual inputs can be authored by a human operator for each query or be selected (by an operator or automatically) from a pre-determined set of text prompts.

In embodiments of the present invention, the system may use the ability of video analytics algorithms to track and analyze objects at high frame rates, identifying, classifying, and tracking objects. The LLM model runs on images sampled from the input video, supplemented with information generated by the video analytics algorithm. Such information can describe trajectory information of moving objects between the input frames, providing the LLM information about motion of objects in the scene, without the need to analyze all video frames by the LLM.

Embodiments of the present invention provide a combined approach addresses the technical limitations of LLMs in directly processing high frame-rate videos due to their large size and computational demands. The LLM can analyze the combined information provided to it by the system: video frames, video analytics data, and text input - to generate a description of the activity visible at the video clip.

In embodiments of the present invention, following initial response from the LLM, operators can query the LLM for more insights or clarification. This process of querying and refining is typically referred to as prompting.

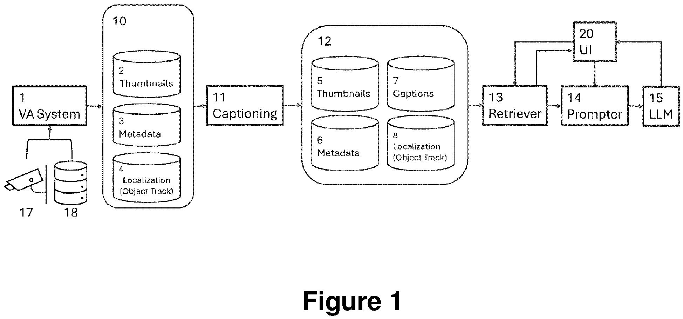

**Figure 1** is a block diagram illustrating architecture of a system accordance with some embodiments of the present invention. Video Analytics (VA) system 1 may process video that may originate from video storage **18** or from a live video camera stream **17** . A typical VA system **1** produces a description of video **10** which is based on the detection and tracking of objects in the video.

According to some embodiments of the present invention, description of video **10** may include some of the following components:
- Tracks of some detected objects in video **4.** A track can include a starting frame, a bounding box (in image coordinates) that includes the image of the object in some or all frames where the object appears, the location in image coordinates or world coordinates of one or more designated points in the object, and the like.
- One or more thumbnail images **2** from each detected object, a thumbnail being the image of the object cut out from a video frame based on the object's bounding box at that frame. Sometimes thumbnail images are rescaled to some predefined size.
- Additional metadata **3** that was computed by the VA system. This can include class of object among the predefined classes the VA system was trained to detect (e.g. person/vehicle/animal/ etc.), size in image coordinates or world coordinates, color features, time, velocity, and more. In many cases such metadata can also include the activity of the objects (E.g. walking, running, sitting, eating, and the like).

According to some embodiments of the present invention, an optional process following the VA system is a "captioning" process **11** such as the BLIP-2 system. The captioning system adds a text description of the image given to it. For example, when a thumbnail will be sent for captioning, a possible caption can be "a man sitting in a wheelchair". The caption can also be generated for an entire frame, describing the environment, such as "a city street in the rain". The benefit of enriching the VA results with captioning is the ability to find classes not predefined by the VA system. The captioning system can also describe object activity, even when the VA system is not trained to detect and classify this activity.

When a user enters a request at the user interface **20,** several things may happen. The first stage is that retriever **13** finds objects from the object database **12** that match the query. For example, examine the query "A person seating in a wheelchair", when the VA system can classify people but has not been trained to classify "wheelchairs". Retriever **13** can find all objects that were classified by the VA system as "people" and the class stored in the metadata **6,** and the objects whose caption 7 included "wheelchair" after the captioning process.

The prompter **14** builds a prompt to be sent to the LLM that consists of some predefined prefix prompt, the user query, and the objects extracted by retriever **13.** For example, for the query "A person seating in a wheelchair", all objects selected by retriever **13** as matching a person and a wheelchair will be send to the LLM together with the user's query, and the LLM will be able to identify which image includes a person sitting in a wheelchair.

As another example, under the user prompt "What is the most common path of people in the scene" retriever **13** selects objects whose metadata includes "person", and transfers to the LLM the original query plus the trajectories of the selected people.

Of special importance is the methods in which trajectories are presented to the LLM. These trajectories can be presented as drawings in an image as described further in the description. Another possible way to present a trajectory to the LLM is by specifying points on this trajectory using text. The points can be given in image coordinates, or in world coordinates. For example, a path description can be: "a path that includes the following image coordinates: (10,10), (20,20), (125, 300), (200, 510). The path between each given point can be considered as a straight line". The response of the LLM to the query is transferred to the UI where it is presented to the user.

The input to the system is video, either live video from a camera or a recorded video from storage The input video may reach three units: a down sampling unit which reduces substantially the number of frames in the video; a video analytics unit which analyzed the video and creates metadata such as trajectories of objects in the video. A user interface unit which displays information to the user and accepts user input. The prompter unit combines some video frames from , the tracks and other meta data and the user input to deliver a combined prompt to the LLM.

The user interface displays the video to the user, who can select frames to be used in the LLM Query. Optionally, the user interface can also display some of the meta data by the video analytics to be used in the query. The user interface also includes an area where the user can enter a prompt querying the video, and an area where the response of the LLM will be displayed. Optionally this can be the same area, which will continually display the used prompt followed by the LLM's response (As a chat dialogue)

Embodiments of the present invention may enable easy querying of video with an LLM, by selecting a few frames, and supplementing the missing frames by data, such as object trajectories; generated by video analytics systems.

The system can operate on demand when an operator selects the video to be analyzed and provides a text prompt. Another possible mode of operation is continuous monitoring of video feed from one or more cameras. A possible embedding of continuous monitoring is as follows: The system divides the video into segments of predefined lengths, that may be overlapping or not. The system sends each segment for video analysis, getting among other information the tracks of objects in the video. The system sends the video frames, the video analytic trajectories, and predefined text query such as "describe in words what happens in this video clip". The system collects all responses of the LLM, such that at any time it could respond to queries like "how many people entered the place between 10am and 11am" just from analyzing the response of the LLM, without the need to do video analysis again.

As another example, the user's query can include environmental features, such as "find all people walking in the rain". Retriever **13** gets all people and all scenes whose caption include the word "rain", and the LLM will select those "people walking in the rain". This works even when the VA system does not know to classify either "walking" or "rain".

As another example, the LLM query can include only the captions that were generated for the selected objects, where the LLM may not need to examine the video or the thumbnails themselves. Such a query can be "is there any difference between morning shoppers in the store and afternoon shoppers?" where data is only the captions and timestamps of the tracked objects in the scene.

Advantageously, by embodiments of the present invention, the VA may digest the entire video very quickly, and by the representation it generates using thumbnails, metadata, and thumbnails is very compact. Embodiments of the present invention substantially improve the process of video understanding, enabling the review of extensive video footage, and integrating diverse data sources for comprehensive analysis.

Further advantageously, by embodiments of the present invention, running the optional image captioning on the VA generated may bring the power of a foundation model that was trained on many more object classes and activities.

Further advantageously, by embodiments of the present invention, LLM may respond to natural language queries. As it is much slower than VA, running the LLM only on objects based on their detection, tracking, and classification by the LLM - makes their use much more efficient.

One application of embodiments of the present invention is for police investigations, but it is applicable to any investigations and extracting information from video. Using the proposed system will extract more data from the video than can be done by human operators, and at a faster speed.

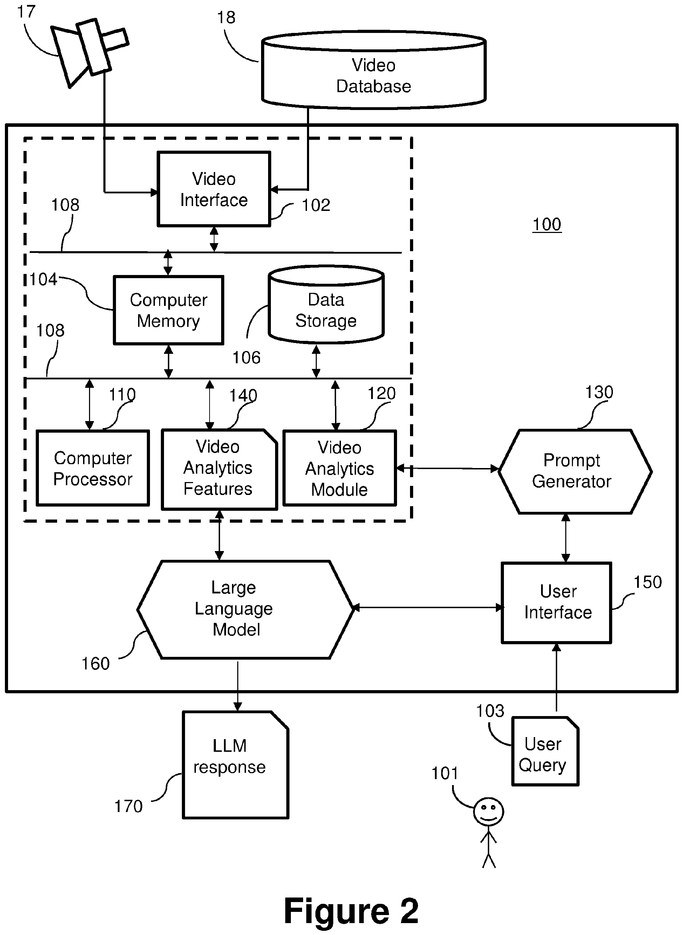

**Figure 2** is a block diagram illustrating an architecture of another system accordance with some embodiments of the present invention. System **100** may include a computer memory **104** arranged to receive a video stream having a sequence of frames and including one or more objects via bus **108** and video interface **102.** The video stream can be obtained either from a video camera **17** or from a video database **18.**

System **100** may further include a computer processor **110** connected via bus **108** to computer memory **104** and arranged to apply video analytics algorithms possibly using video analytics module **120,** to the video stream, to yield video analytics features **140** indicative of the one or more objects. These features may be stored on data storage **106.**

System **100** may further include a user interface **150** arranged to receive a user query **103** comprising a verbal or auditory enquiry relating to the one or more objects in the video stream.

According to some embodiments of the present invention, in operation, computer processor **110** is further arranged to carry out a selection of at least one of the one or more objects in the video stream. In other embodiments the selection is carried out by user **103** over user interface **150.**

According to some embodiments of the present invention, computer processor **110** is further arranged to generate, a prompt which is usable as a query for a large language model (LLM), based on: the user query, the video analytics features, and the selection of at least one of the one or more objects.

According to some embodiments of the present invention, computer processor **110** is further arranged to apply the prompt to LLM **160,** to yield an LLM response **170.**

According to some embodiments of the present invention, user interface **150** is further arranged to present the LLM response **170** to the user.

According to some embodiments of the present invention, one or more objects may include at least one activity associated with the one or more objects.

According to some embodiments of the present invention, video analytics features **140** may include at least one of: at least one trajectory of the one or more objects; a bounding box of the one or more objects; a thumbnail indicative of the bounding box of the one or more objects; and metadata describing attributes of the one or more objects.

According to some embodiments of the present invention, the metadata describing object attributes comprises object class, object size, color features, and motion features.

According to some embodiments of the present invention, user query **103** may include a request for a verbal description of the content of the video stream.

According to some embodiments of the present invention, video stream may be a continuous video, wherein the method further comprises dividing, using the computer processor, the continuous video into video clips and applying the aforementioned action of computer **110** processor on the video clips.

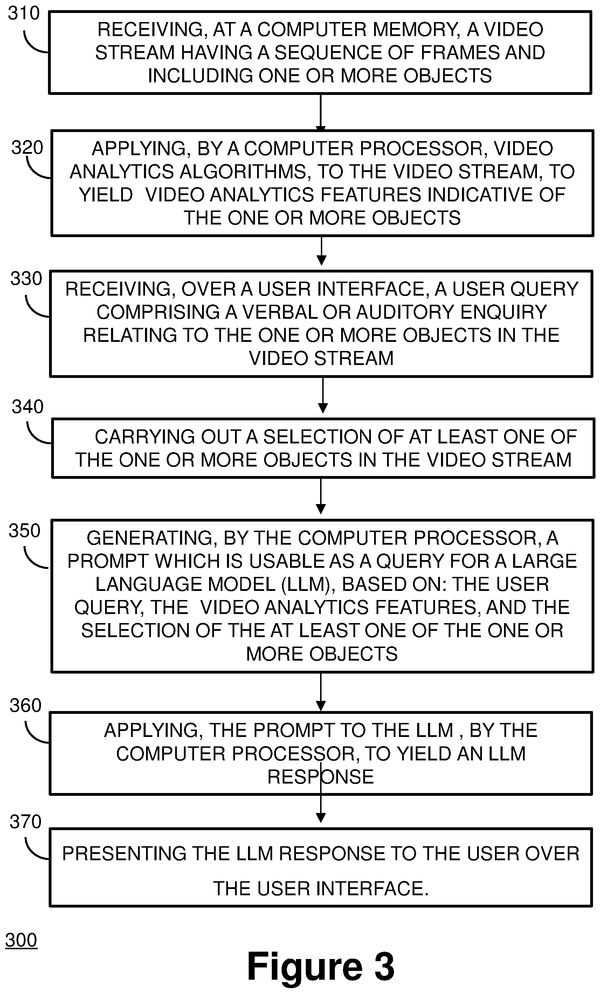

**Figure 3** is a high-level flowchart illustrating a method in accordance with some embodiments of the present invention. A method **300** of querying a video by incorporating video analytics and large language models may include the following steps: receiving, at a computer memory, a video stream having a sequence of frames and including one or more objects **310;** applying, by a computer processor, video analytics algorithms, to the video stream, to yield video analytics features indicative of the one or more objects **320;** receiving, over a user interface, a user query comprising a verbal or auditory enquiry relating to the one or more objects in the video stream **330;** carrying out a selection of at least one of the one or more objects in the video stream **340;** generating, by the computer processor, a prompt which is usable as a query for a large language model (LLM), based on: the user query, the video analytics features, and the selection of the at least one of the one or more objects **350;** and applying, the prompt to the LLM , by the computer processor, to yield an LLM response **360.**

According to some embodiments of the present invention, method **300** may further include the step of presenting the LLM response to the user over the user interface **370.**

According to some embodiments of the present invention, in method **300** the one or more objects may include at least one activity associated with the one or more objects.

According to some embodiments of the present invention, in method **300** the video analytics features may include at least one of: at least one trajectory of the one or more objects; a bounding box of the one or more objects; a thumbnail indicative of the bounding box of the one or more objects; and metadata describing attributes of the one or more objects.

According to some embodiments of the present invention, in method **300** the metadata describing object attributes may include object class, object size, color features, and motion features.

According to some embodiments of the present invention, in method **300** the user query may include a request for a verbal description of a content of the video stream.

According to some embodiments of the present invention, in method **300** the video stream may be a continuous video, wherein method **300** further include the step of dividing, using the computer processor, the continuous video into video clips and applying the method on the video clips.

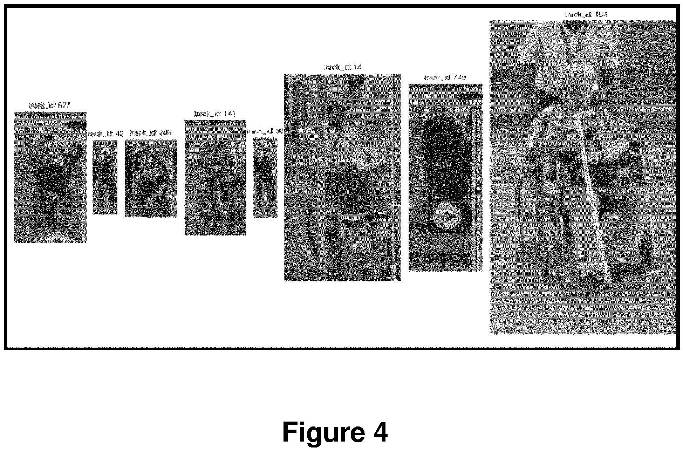

**Figure 4** shows a video frame and thumbnails of objects illustrating an aspect in accordance with some embodiments of the present invention. A query can be "is there a man sitting in a wheelchair? "What is its track ID and object thumbnail list?" After applying embodiments of the present invention with the use of thumbnails so an LLM can answer it, an answer generated the LLP can be "Yes, there are several objects representing a man in a wheelchair, including one at an airport terminal building lobby area, and another man pushing the wheelchair".

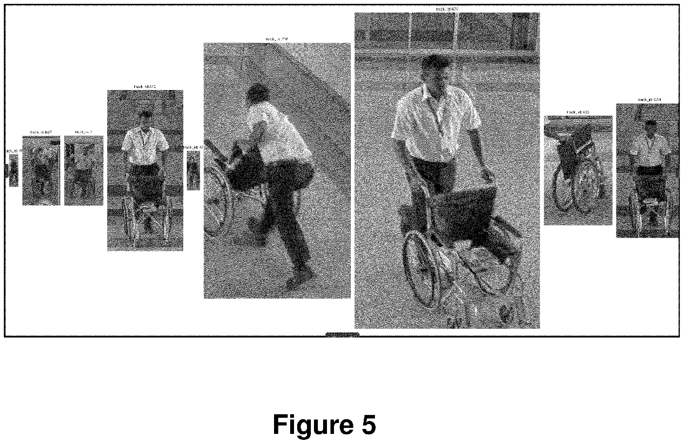

**Figure 5** shows a video frame and thumbnails of objects illustrating an aspect in accordance with some embodiments of the present invention. A query can be: "Is there an image of a person pushing an empty wheelchair? What is its track ID and object thumbnail list?" After applying embodiments of the present invention with the use of thumbnails so an LLM can answer it, an answer by the LLP can direct to the specific object showing the person pushing an empty wheelchair.

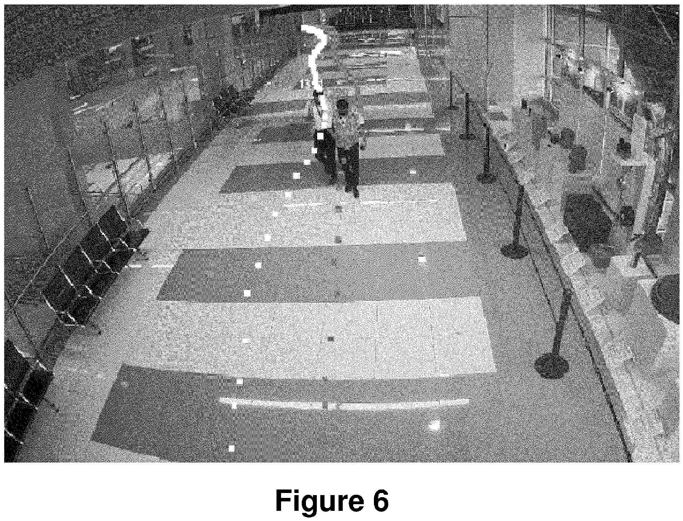

**Figure 6** shows a video frame illustrating an aspect in accordance with some embodiments of the present invention. A query can be: "Describe the motion of person 1390 and person 1391 in the scene. Note that their trajectories were sampled at a rate of 3 frames per second". The trajectories are added using video analytics as explained above. The LLM response may be: "In the image provided, person 1390 (marked with green dots) appears to have moved in a smooth, curving path from the bottom right of the frame, moving towards the top left of the frame. The green dots indicate the trajectory taken over time, sampled at a rate of 3 frames per second. It seems that the person took a slight turn to the left initially and then started curving right, moving past the rows of chairs and towards the area near the displays. Person 1391 (marked with white dots) has a shorter visible trajectory. It appears they started from the left side of the frame and moved in a fairly straight line towards the right. Given the short trajectory shown, it's not possible to infer more about their motion pattern, but it looks like they were heading in the direction of person 1390. The image seems to be from a surveillance system using a tracking algorithm to monitor the movements of individuals within the camera's field of view. The smoothness of the trajectories suggests that both individuals were walking at a steady pace without abrupt changes in speed or direction within the time frame captured".

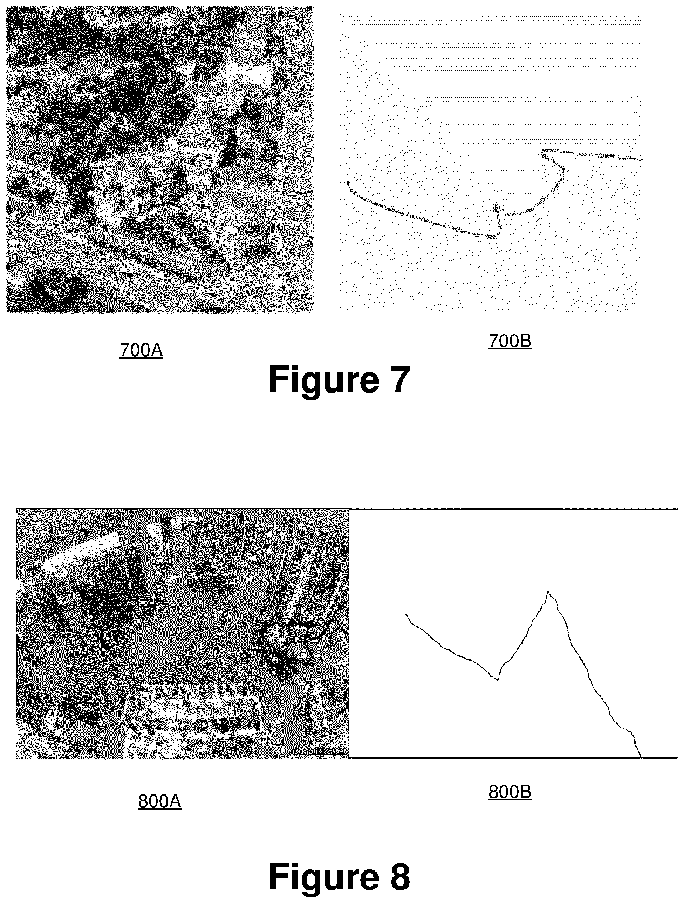

**Figure 7** shows a video frame **700A** and trajectory diagram **700B** illustrating an aspect in accordance with some embodiments of the present invention. As illustrated below, it is possible to prompt the system with the following two input images plus text prompt: "A suspect was seen to walk in the picture described in the first picture **700A,** along the route depicted in the second picture **700B** (usually it would be overlaid on the first image but here they are separated for clarity). Please describe the places that the suspect has visited and what could be his motivation".

After applying the prompt to the LLM the answer may be: "Let's start by looking at the first image. This appears to be an aerial view of a residential area with individual houses, gardens, and a clear road structure. There are driveways, possibly a main road running along the bottom of the image, and some side streets. The second image appears to be a simple line drawing that represents the route taken by a person. By conceptualizing the overlay of the second image on the first, I can infer the path taken by the suspect through the neighborhood. However, without being able to physically overlay the images, my analysis will be an approximation: The suspect seems to start from the bottom of the image, possibly entering the neighborhood from a main road. They make their way along the front of the first row of houses, indicating they are not directly entering any of them but perhaps surveying them from the front. The suspect continues past a corner house and appears to make a deliberate turn into the neighborhood, possibly onto a side street or a driveway. They then seem to circle around a specific area, which could be a block of houses or a particular house, suggesting they may be interested in that location or observing something there. As for motivation, it could range from benign to nefarious. Here are a few speculative reasons: Delivery or Postal Worker: The path could be a delivery route, and the circling might indicate looking for the correct address. Sales or Services: They might be a door-to-door salesperson or offering services like landscaping, and the route reflects them canvassing the neighborhood. Surveillance: The suspect could be surveying homes for potential burglary, noting security measures or times when houses are unoccupied. Social Visit: They could be visiting someone but are unsure of the exact house and therefore are searching the area. Lost Individual: They might simply be lost and trying to find their way to a specific location."

**Figure 8** shows a video frame **800A** and a trajectory diagram **800B** illustrating an aspect in accordance with some embodiments of the present invention. A prompt generated by embodiment of the present invention and using video analytics can be: I attached two images: The first is an image of a store, and the second one is an image of a route of a person that was overlaid on that first image (same coordinate system). Please describe the route that the person has done since he entered the store from the bottom right side. Try to refer to the stores landmark rather than to the directors or angles of the route. Also try to understand the person's motivation" .

After applying to the LLM in accordance with some embodiments of the present invention, the response may be: "Based on the images you've provided, it seems that the first image is of the interior of a store with various shoe displays, and the second image shows a line tracing a person's path through the store. Here is a descriptive narrative of the route that the person took: Upon entering the store from the bottom right, the individual seems to have headed straight towards the first large island display of shoes positioned near the entrance. They lingered there momentarily, which suggests an initial interest, possibly in a featured selection of shoes or a new arrival section typically placed at the entrance to catch the attention of customers. Next, the person continued to the left but did not engage with the smaller displays directly adjacent to the first. Instead, they made their way towards the central aisle, passing by several rows of shoe displays without stopping. This indicates that the person might have been looking for something specific or perhaps was simply browsing through the selection without finding anything immediately appealing. The individual then veered slightly towards a distinct central display area, which could represent a promotional section or a highlighted category of footwear, such as seasonal offerings or sale items. Afterward, they took a sharp turn back towards the left side of the store, navigating around another large display, perhaps indicating a change of mind or a remembered interest in checking another section of the store. Following this, they seemed to explore the middle section thoroughly, taking a winding path through various displays. This part of the journey suggests a more focused search, possibly comparing different options or searching for a particular style or size. Finally, they made their way back towards the front of the store, where they encountered a seated area. Here, the person seems to have taken a pause, likely to rest or perhaps wait for someone. This could indicate they had finished their shopping or were contemplating a potential purchase. Throughout the route, the person's motivation appears to be a mix of directed shopping with specific goals in mind, as evidenced by the bee-lines to certain areas, as well as casual browsing, as shown by the meandering through different sections. The final stop at the seating area suggests that the visit may have been concluded or there was a need for a break, possibly to make a decision or meet with someone".

The above examples show how embodiments of the present invention augment a video stream or video frames with video analytics to produce a prompt that can be applied to an LLM.

Some embodiments of the invention may be carried out by a computing system. For example, a processor, operatively connected to a memory holding data and software, code, or instructions, may be configured or programmed by the software, code or instructions to carry out embodiments of the present invention. More than one such processor or computing system may be use.

It should be noted that all methods according to some embodiments of the present invention may be stored as instructions in a computer readable medium to cause processors, such as central processing units (CPU) to perform the method. Additionally, the method described in the present disclosure can be stored as instructions in a non-transitory computer readable medium, such as storage devices which may include hard disk drives, solid state drives, flash memories, and the like. Additionally, non-transitory computer readable medium can be memory units.

In order to implement the method according to some embodiments of the present invention, a computer processor may receive instructions and data from a read-only memory or a random-access memory or both. At least one of aforementioned steps is performed by at least one processor associated with a computer. The essential elements of a computer are a processor for executing instructions and one or more memories for storing instructions and data. Generally, a computer will also include, or be operatively coupled to communicate with, one or more mass storage devices for storing data files. Storage modules suitable for tangibly embodying computer program instructions and data include all forms of non-volatile memory, including by way of example semiconductor memory devices, such as EPROM, EEPROM, and flash memory devices and also magneto-optic storage devices.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, some aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, JavaScript Object Notation (JSON), C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Some aspects of the present invention are described above with reference to flowchart illustrations and/or portion diagrams of methods, apparatus (systems) and computer program products according to some embodiments of the invention. It will be understood that each portion of the flowchart illustrations and/or portion diagrams, and combinations of portions in the flowchart illustrations and/or portion diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or portion diagram portion or portions.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or portion diagram portion or portions.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or portion diagram portion or portions.

The aforementioned flowchart and diagrams illustrate the architecture, functionality, and operation of possible implementations of systems, methods and computer program products according to various embodiments of the present invention. In this regard, each portion in the flowchart or portion diagrams may represent a module, segment, or portion of code, which comprises one or more executable instructions for implementing the specified logical function(s). It should also be noted that, in some alternative implementations, the functions noted in the portion may occur out of the order noted in the figures. For example, two portions shown in succession may, in fact, be executed substantially concurrently, or the portions may sometimes be executed in the reverse order, depending upon the functionality involved. It will also be noted that each portion of the portion diagrams and/or flowchart illustration, and combinations of portions in the portion diagrams and/or flowchart illustration, can be implemented by special purpose hardware-based systems that perform the specified functions or acts, or combinations of special purpose hardware and computer instructions.

In the above description, an embodiment is an example or implementation of the inventions. The various appearances of "one embodiment", "an embodiment", or "some embodiments" do not necessarily all refer to the same embodiments.

Although various features of the invention may be described in the context of a single embodiment, the features may also be provided separately or in any suitable combination. Conversely, although the invention may be described herein in the context of separate embodiments for clarity, the invention may also be implemented in a single embodiment.

Reference in the specification to "some embodiments", "an embodiment", "one embodiment" or "other embodiments" means that a particular feature, structure, or characteristic described in connection with the embodiments is included in at least some embodiments, but not necessarily all embodiments, of the inventions.

It is to be understood that the phraseology and terminology employed herein is not to be construed as limiting and are for descriptive purpose only. The principles and uses of the teachings of the present invention may be better understood with reference to the accompanying description, figures and examples. It is to be understood that the details set forth herein do not construe a limitation to an application of the invention. Furthermore, it is to be understood that the invention can be carried out or practiced in various ways and that the invention can be implemented in embodiments other than the ones outlined in the description above.

It is to be understood that the terms "including", "comprising", "consisting" and grammatical variants thereof do not preclude the addition of one or more components, features, steps, or integers or groups thereof and that the terms are to be construed as specifying components, features, steps or integers.

If the specification or claims refer to "an additional" element, that does not preclude there being more than one of the additional element. It is to be understood that, where the claims or specification refer to "a" or "an" element, such reference is not be construed that there is only one of that element. It is to be understood that, where the specification states that a component, feature, structure, or characteristic "may", "might", "can" or "could" be included, that particular component, feature, structure, or characteristic is not required to be included.

Where applicable, although state diagrams, flow diagrams or both may be used to describe embodiments, the invention is not limited to those diagrams or to the corresponding descriptions. For example, flow need not move through each illustrated box or state, or in exactly the same order as illustrated and described.

Methods of the present invention may be implemented by performing or completing manually, automatically, or a combination thereof, selected steps or tasks.

The term "method" may refer to manners, means, techniques and procedures for accomplishing a given task including, but not limited to, those manners, means, techniques and procedures either known to, or readily developed from known manners, means, techniques and procedures by practitioners of the art to which the invention belongs.

The descriptions, examples, methods and materials presented in the claims and the specification are not to be construed as limiting but rather as illustrative only.

Meanings of technical and scientific terms used herein are to be commonly understood as by one of ordinary skill in the art to which the invention belongs, unless otherwise defined. The present invention may be implemented in the testing or practice with methods and materials equivalent or similar to those described herein. Any publications, including patents, patent applications and articles, referenced or mentioned in this specification are herein incorporated in their entirety into the specification, to the same extent as if each individual publication was specifically and individually indicated to be incorporated herein. In addition, citation or identification of any reference in the description of some embodiments of the invention shall not be construed as an admission that such reference is available as prior art to the present invention.

While the invention has been described with respect to a limited number of embodiments, these should not be construed as limitations on the scope of the invention, but rather as exemplifications of some of the preferred embodiments. Other possible variations, modifications, and applications are also within the scope of the invention. Accordingly, the scope of the invention should not be limited by what has thus far been described, but by the appended claims and their legal equivalents.

## Claims

1. A method comprising:
receiving, at a computer memory, a video stream having a sequence of frames and including one or more objects;
applying, by a computer processor, video analytics algorithms, to the video stream, to yield video analytics features indicative of the one or more objects;
receiving, over a user interface, a user query comprising a verbal or auditory enquiry relating to the one or more objects in the video stream;
carrying out a selection of at least one of the one or more objects in the video stream;
generating, by the computer processor, a prompt which is usable as a query for a large language model (LLM), based on: the user query, the video analytics features, and the selection of the at least one of the one or more objects; and
applying, the prompt to the LLM , by the computer processor, to yield an LLM response.

2. The method of claim 1, further comprising presenting the LLM response to the user over the user interface.

3. The method of claim 1, wherein the one or more objects comprise at least one activity associated with the one or more objects.

4. The method of claim 1, wherein the video analytics features comprise at least one of: at least one trajectory of the one or more objects; a bounding box of the one or more objects; a thumbnail indicative of the bounding box of the one or more objects; and metadata describing attributes of the one or more objects.

5. The method of claim 4, wherein the metadata describing object attributes comprises object class, object size, color features, and motion features.

6. The method of claim 1, wherein the a user query comprises a request for a verbal description of a content of the video stream.

7. The method of claim 1, wherein the video stream is a continuous video, wherein the method further comprises dividing, using the computer processor, the continuous video into video clips and applying the method on the video clips.

8. A system comprising:
a computer memory arranged to receive a video stream having a sequence of frames and including one or more objects;
a computer processor arranged to apply video analytics algorithms, to the video stream, to yield video analytics features indicative of the one or more objects; and
a user interface arranged to receive a user query comprising a verbal or auditory enquiry relating to the one or more objects in the video stream,
wherein the computer processor is further arranged to carry out a selection of at least one of the one or more objects in the video stream,
wherein the computer processor is further arranged to generate, a prompt which is usable as a query for a large language model (LLM), based on: the user query, the video analytics features, and the selection of the at least one of the one or more objects, and
wherein the computer processor is further arranged to apply the prompt to the LLM, to yield an LLM response.

9. The system of claim 8, wherein the user interface is further arranged to present the LLM response to the user.

10. The system of claim 8, wherein the one or more objects comprise at least one activity associated with the one or more objects.

11. The system of claim 8, wherein the video analytics features comprise at least one of: at least one trajectory of the one or more objects; a bounding box of the one or more objects; a thumbnail indicative of the bounding box of the one or more objects; and metadata describing attributes of the one or more objects.

12. The system of claim 11, wherein the metadata describing object attributes comprises object class, object size, color features, and motion features.

13. The system of claim 8, wherein the user query comprises a request for a verbal description of a content of the video stream.

14. The system of claim 8, wherein the video stream is a continuous video, wherein the method further comprises dividing, using the computer processor, the continuous video into video clips and applying the method on the video clips.

15. A non-transitory computer readable medium comprising a set of instructions that, when executed, cause at least one computer processor to:
receive a video stream having a sequence of frames and including one or more objects;
apply video analytics algorithms, to the video stream, to yield video analytics features indicative of the one or more objects; and
receive a user query comprising a verbal or auditory enquiry relating to the one or more objects in the video stream,
carry out a selection of at least one of the one or more objects in the video stream,
generate, a prompt which is usable as a query for a large language model (LLM), based on: the user query, the video analytics features, and the selection of the at least one of the one or more objects, and
apply the prompt to the LLM, to yield an LLM response.
